# EUROPEAN PATENT APPLICATION

(11) **EP 1 431 056 A2**
(43) Date of publication of application: **23.06.2004**
(21) Application number: 03256269.6
(22) Date of filing: 03.10.2003
(51) Int. Cl.: B41M 5/00, B41M 5/26, G11B 7/24

(54) **Optical recording medium**

(30) Priority: 04.10.2002 JP 2002292776
(71) Applicant: Fuji Photo Film Co., Ltd., Kanagawa (JP)
(72) Inventor: Aramaki, Satoshi c/o Fuji Photo Film Co., Ltd., Tokyo (JP); Watanabe, Norihiro c/o Fuji Photo Film Co., Ltd., Tokyo (JP)
(74) Representative: Stevens, Jason Paul

(57) **Abstract**

An optical recording medium is provided, which includes: a substrate; a recording layer formed on the substrate, on which information can be recorded using laser light; and a protective layer or a protective substrate provided on the recording layer; and is characterized in that a water-based ink receiving area (11) and a water-insoluble ink receiving area (10a,10b) are formed on the protective layer or the protective substrate, and the water-insoluble ink receiving area comprises a substantially rectangular smooth area (10a',10b'). The substantially rectangular smooth area is preferably formed of water-insoluble ink or a water-insoluble material. The substantially rectangular smooth area preferably has an area of at least 5 cm².

## Description

### BACKGROUND OF THE INVENTION

### Field of the Invention

The present invention relates to an optical recording medium, and more particularly, to an optical recording medium provided with a water-based ink receiving area and a water-insoluble ink receiving area formed on a label side thereof.

### Description of the Related Art

A recordable optical information recording medium (optical disk) on which information can be recorded only once with laser light is widely known as a CD-R. Also, an optical disk known as a recordable digital versatile disk (DVD-R), which is a medium capable of higher density recording than CD-Rs, has been put into practical use and has established its position as a large capacity recording medium (see, for example, *DVD,* a separate volume of *Nikkei New Media*, published in 1995).

Among the above-described CD-R and DVD-R type optical disks, optical disks provided with a water-based ink receiving layer on a label side (a side opposite from the side on which laser light is irradiated at the time of recording or reproduction) thereof have been put into practical use.

On the water-based ink receiving layer, a user can provide indication of contents of information recorded on the optical disk, and can print a photographic image or an illustration on an entire surface of the label side of the optical disk using an ink jet printer, or write characters, or the like, using a water-based ink pen.

When a CD-R type optical disk is used for general business purposes, it is rare to print an illustration or a photographic image on the entire surface of the label side. Usually, only a title of contents recorded on the CD-R type optical disk, a business-related reference number, and the like, are printed on the label side. Therefore, in some cases, it is sufficient that the water-based ink receiving layer is partially provided on the label side.

Optical recording disks, on the label side of which is provided a message title area, in which a message title is formed by printing, and a message writable area, in which a message can be written with a pen, and the like have been proposed (see, for example, Japanese Utility Model Application Laid-Open (JP-U) No. 7-26988).

However, when desired information is printed by thermal transfer recording on the message title area and periphery thereof of the optical recording disk, printing defects such as stains on the printed portion or on areas surrounding the printing area may sometimes be produced and appearance of the label side of the disk may be damaged.

### SUMMARY OF THE INVENTION

In view of the aforementioned, a purpose of the present invention is to provide an optical recording media, wherein no stain or blur is produced on a printed portion and areas surrounding a printing area by thermal transfer recording, or the like, and therefore printing defects can be reduced.

With thorough study of causes of printing defects such as described above, the present inventors have found that stain is produced on the printing area when there is a protrusion in a thermal transfer recording area. Further, in thermal transfer recording, the entire printing area (a thermal head contact area) is heated. Therefore, when there is a protrusion in areas surrounding the printing area, ink is transferred onto the protrusion and stain is produced, or the thermal head does not contact areas surrounding the protrusion and blur is produced. Based on this knowledge, the inventors have made the following invention which can achieve the above-described purpose. Namely, the invention provides an optical recording medium comprising: a substrate; a recording layer formed on the substrate, on which information can be recorded using laser light; one of a protective layer and a protective substrate provided on the recording layer; a water-based ink receiving area and a water-insoluble ink receiving area formed on said one of the protective layer and the protective substrate, wherein at least one of the water-insoluble ink receiving area comprises a substantially rectangular smooth area.

Further, the invention provides an optical recording medium comprising: a substrate; a recording layer formed on the substrate, on which information can be recorded using laser light; one of a protective layer and a protective substrate provided on the recording layer; and a water-based ink receiving area and a water-insoluble ink receiving area formed on said one of the protective layer and the protective substrate, wherein at least a portion of the water-insoluble ink receiving area, at which a thermal head of a printer overlaps, comprises a substantially rectangular smooth area.

Still further, the invention provides the optical recording medium, wherein the substantially rectangular smooth area has an area of at least 5 cm².

Yet further, the invention provides the optical recording medium, wherein the substantially rectangular smooth area includes no protrusion having a height exceeding 5 *µ*m.

Moreover, the invention provides the optical recording medium, wherein the substantially rectangular smooth area comprises at least one of a water-insoluble ink and a water-insoluble material.

### BRIEF DESCRIPTION OF THE DRAWINGS

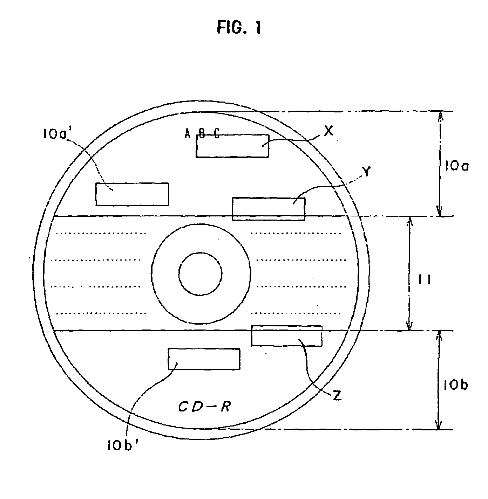

Fig. 1 is a plan view showing an example of an optical recording medium according to the present invention.

### DETAILED DESCRIPTION OF THE INVENTION

An optical recording medium of the present invention is provided with a water-based ink receiving area and a water-insoluble ink receiving area formed on a protective layer or a protective substrate thereof, and at least one of the water-insoluble ink receiving area comprises a substantially rectangular smooth area (hereinafter, it may be simply referred to as "substantially rectangular area").

Fig. 1 shows a plan view of an example of a first optical recording medium of the invention. A label side of the optical recording medium shown is divided into three areas. From the upper side of the drawing, a water-insoluble ink receiving area 10a, a water-based ink receiving area 11 and a water-insoluble ink receiving area 10b are formed.

The water-insoluble ink receiving areas 10a and 10b are areas on which water-based ink cannot work to display thereon, and mainly thermal transfer recording using an ink ribbon, or the like, is employed there to print a photographic image, text information, an illustration, and the like. Considering about displaying information, and the like, by thermal transfer recording, the water-insoluble ink receiving areas 10a and 10b are entirely or partially formed as substantially rectangular areas 10a' and 10b'.

The term "substantially rectangular" used herein refers not only to a shape having right angle corners, but also to a shape having approximately right angle (e.g., 90° ± 5° ) corners, or the like.

A size of the substantially rectangular area needs to be varied depending on a thermal transfer area (thermal head contact area) in thermal transfer recording. Particularly, when printing is performed with the thermal head contacting the label side such as for printing a solid image, heat from the thermal head affects a range larger than the thermal transfer area. Therefore, the substantially rectangular area is formed so as to include overlapping area of the thermal head.

Dimensions of the substantially rectangular area can be varied. An area of one substantially rectangular area is preferably 5 cm² or more, and more preferably 11.8 cm² or more. The substantially rectangular area of 5 cm² or more allows minimum display such as a title of recorded contents, a creation date, or the like. An upper limit of the area is preferably 31.2 cm², and more preferably 17.5 cm².

A surface of the protective layer or the protective substrate can be used as the water-insoluble ink receiving areas 10a and 10b. However, the water-insoluble ink receiving areas 10a and 10b can be formed using a material such as ink which does not contain hydrophilic particle or a surfactant.

In any case, the substantially rectangular areas 10a' and 10b', which are whole or part of the water-insoluble ink receiving areas, are required to have a smooth surface. If the surface is not smooth and includes a protrusion or a difference in level, print defects may be caused, such that stain may be produced on the printed portion, stain may be produced by ink transferred onto the protrusion when the entire printing area is heated, or blur may be produced when ink is not sufficiently be transferred onto areas around the protrusion.

Further, from a standpoint of preventing defects in thermal transfer of ink caused by moisture absorption in a highly humid environment, the substantially rectangular smooth area is preferably formed of at least water-insoluble ink (for example, trade name: UVSP THERMAL INK, manufactured by Teikoku Printing Inks Mfg. Co., Ltd. ) or a known water-insoluble material.

The term "smooth" used herein means that the surface is smooth enough for not causing the above-described print defects during thermal transfer recording, and preferably refers to a state in which there is no protrusion exceeding 5 *µ*m with respect to an average surface. Such an area is formed such that the thermal head contact area (the substantially rectangular area) does not contact areas in the vicinity of boundaries of water-based ink receiving area, and the like, and previously printed portions, and the like.

By limiting the height of the protrusion not to exceed 5 *µ*m, the print defects such as described above can be effectively prevented. More preferable height of the protrusion is not more than 3 µm.

Further, if a depression is present in the substantially rectangular areas 10a' and 10b', an image obtained thereon by printing, or the like, may have a defect such as a blank spot. From a standpoint of preventing such defects, it is preferable to have a surface roughness (arithmetic average roughness : Ra) be not more than 0.1 *µ*m, while the height of the protrusion is limited to not more than 5 *µ*m.

For example, as shown by areas X and Y in Fig. 1, if the substantially rectangular area partially overlaps with a text information portion (corresponding to characters "A B C" in Fig. 1) or with the water-based ink receiving area 11 and a difference in level is created therein, the text information portion and the water-based ink receiving area 11 respectively form a protrusion. In this case, if the height of the protrusion is greater than above-described 5 *µ*m, print defects are caused.

Therefore, it is preferable to form the substantially rectangular area so as not to overlap with a text information portion such as described above or the water-based ink receiving area 11. If the substantially rectangular area overlaps with a text information portion or the water-based ink receiving area 11, then the height of the protrusion is limited to not more than 5 *µ*m. Further, if the water-based ink receiving area overlaps with the water-insoluble ink receiving area, the water-insoluble ink receiving area is formed to have an area larger than the contact area of the thermal head of the printer, so that the water-insoluble ink receiving area overlaps with the water-based ink receiving area at the outside of the contact area.

In the water-based ink receiving area 11, a photographic image, text information, an illustration, or the like, can be printed or otherwise displayed using ink jet, a water-based ink pen, a stamp, or the like.

The water-based ink receiving area 11 can be formed on a surface of the protective layer or the protective substrate using an ink-jet receiving ink (for example, trade name: UVSPJR INK manufactured by Teikoku Printing Inks Mfg. Co., Ltd.) or a material described in Japanese Patent Application Laid-Open (JP-A) No. 2001-325750 (particularly, a material used in Examples), or the like.

As described above, the water-insoluble ink receiving area and the water-based ink receiving area provided on the label side allows a user to write various images or text information in these areas, thereby enabling creation of an optical recording medium with user's originality or high convenience.

It should be noted that the arrangement shown in Fig. 1 is only an example and is not intended to limit the invention. Although the water-insoluble ink receiving areas and the water-based ink receiving area are adjacent to each other in Fig. 1, these areas may be spaced apart from each other. These areas may be formed in various layouts in consideration of design, or the like. For example, there may be water-based ink receiving areas at upper and lower portions (as shown in the drawing) of the label side and a water-insoluble ink receiving area provided therebetween.

The optical recording medium of the invention having the label side such as described above can be applied to an optical recording medium having a recording layer on/from which information can be recorded/reproduced using laser light, or an optical recording medium having a recording section (pits) including recorded information which can be reproduced using laser light.

It should be noted that the former refers to a recordable or rewritable optical recording medium on which information can be written such as CD-R, CD-RW, DVD-R, DVD-RW or DVD-RAM, and the latter refers to a recording medium including previously written information such as CD or DVD.

An example of structure of an optical recording medium having a recording layer is one which includes a substrate, and a recording layer, a light reflecting layer and a protective layer formed in this order on the substrate; or one which includes a substrate, and at least a recording layer, a light reflecting layer, an adhesive layer and a protective substrate (dummy substrate) formed in this order on the substrate.

Now, the substrate and respective layers used in the invention are described. It should be noted that layer structures, materials, and the like, are only given as examples, and are not intended to limit the invention.

### Substrate

As the substrate, any of various materials used as a substrate in conventional optical recording media can be selected.

Specific examples thereof include glass; acrylic resins such as polycarbonate and polymethylmethacrylate; vinyl chloride resins such as polyvinyl chloride and vinyl chloride copolymer; epoxy resin; amorphous polyolefine; polyester; metals such as aluminum; and the like. These materials may be used in combination, as desired.

Among the above-listed materials, amorphous polyolefine and polycarbonate are preferable, and polycarbonate is particularly preferable because of their moisture resistance, dimensional stability, low cost, and the like. A thickness of the substrate is preferably from 0.5 to 1.2 mm, and more preferably from 0.6 to 1.1 mm.

An unleveled portion representing a guide groove for tracking or information such as an address signal (pre-groove) is formed on the substrate.

In a case of a DVD-R or a DVD-RW, a track pitch of the pre-groove preferably ranges from 300 to 900 nm, more preferably from 350 to 850 nm, and even more preferably from 400 to 800 nm. If the track pitch is less than 300 nm, it becomes difficult to precisely form the pre-groove and problems such as cross talk may occur. If the track pitch exceeds 900 nm, recording density may be reduced.

A depth of the pre-groove (groove depth) preferably ranges from 100 to 160 nm, more preferably from 120 to 150 nm, and even more preferably from 130 to 140 nm. If the depth is less than 100 nm, a sufficient degree of recording modulation may not be obtained. If the depth exceeds 160 nm, reflectance may significantly be reduced.

A half-width of the pre-groove preferably ranges from 200 to 400 nm, more preferably from 230 to 380 nm, and even more preferably from 250 to 350 nm. If the half-width is less than 200 nm, the groove may not sufficiently be transferred at the time of pressing, and error rate of record may be increased. If the half-width exceeds 400 nm, pits formed during recording may be widened and this may cause cross talk, or a sufficient degree of modulation may not be obtained.

In a case of a CD-R or a CD-RW, a track pitch of the pre-groove preferably ranges from 1.2 to 2.0 *µ*m, more preferably from 1.4 to 1.8 *µ*m, and even more preferably from 1.55 to 1.65 *µ*m*.*

A depth of the pre-groove (groove depth) preferably ranges from 100 to 250 nm, more preferably from 150 to 230 nm, and even more preferably from 170 to 210 nm.

A half-width of the pre-groove preferably ranges from 400 to 650 nm, more preferably from 480 to 600 nm, and even more preferably from 500 to 580 nm.

It should be noted that significance of these ranges for the numerical values of the pre-groove are the same as those in the case of a DVD-R or a DVD-RW. Recording Layer

In a case of a CD-R or a DVD-R, the recording layer is formed by: dissolving a dye, which is a recording substance, in a suitable solvent together with a binder, and the like, to prepare a coating solution; coating the coating solution using spin coating on a side of the substrate on which a pre-groove is formed to form a coating film; and drying the coating film.

Temperature for spin coating is preferably 23°C or more, and more preferably 25°C or more. The upper limit of the temperature is not particularly specified, however, the temperature needs to be lower than the flash point of the solvent, and 35°C is preferable. If the temperature is lower than 23°C, the solvent takes longer time to dry. In such a case, a desired thickness of dye film (thickness of the recording layer) may not be obtained, or productivity may be lowered because of longer coating and drying time.

Examples of the dye include a cyanine dye, an oxonol dye, a metal complex dye, an azo dye, a phthalocyanine dye, and the like. Among them, a phthalocyanine dye is preferable.

Further, dyes described, for example, in JP-A Nos. 4-74690, 8-127174, 11-53758, 11-334204, 11-334205, 11-334206, 11-334207, 2000-43423, 2000-108513 and 2000-158818 are also preferably used.

Examples of the solvent for the coating solution include esters such as butyl acetate, ethyl lactate and 2-methoxyethyl acetate; ketones such as methyl ethyl ketone, cyclohexanone and methyl isobutyl ketone; chlorinated hydrocarbons such as dichloromethane, 1,2-dichloromethane and chloroform; amides such as dimethylformamide; hydrocarbons such as methylcyclohexane; ethers such as tetrahydrofuran, ethylether and dioxane; alcohols such as ethanol, n-propanol, isopropanol and n-butanol diacetone alcohol; fluorine solvents such as 2,2,3,3-tetrafluoropropanol; glycol ethers such as ethylene glycol monomethyl ether, ethylene glycol monoethyl ether and propylene glycol monomethyl ether; and the like.

The solvents can be used alone or in combination of two or more of them considering solubility of the recording substance to be used. Further, various additives such as an antioxidant, a UV absorbent, a plasticizer and a lubricant may be added in the coating solution, as required.

If a binder is used, examples thereof include natural organic polymers such as gelatin, cellulose derivatives, dextran, rosin and rubber; and synthetic organic polymers, for example, hydrocarbon resins such as polyethylene, polypropylene, polystyrene and polyisobutylene; vinyl resins such as polyvinyl chloride, polyvinylidene chloride and polyvinyl chloride/polyvinyl acetate copolymer; acrylic resins such as poly(methyl acrylate) and poly(methyl methacrylate); polyvinyl alcohol, chlorinated polyethylene, epoxy resins, butyral resins, rubber derivatives, and precondensates of a thermosetting resin such as phenol-formaldehyde resin. When the binder is used in combination with the materials of the recording layer, the amount of the binder generally ranges from 0.01 time to 50 times (mass ratio), and preferably from 0.1 time to 5 times (mass ratio) of the recording materials. The concentration of the recording substance present in thus prepared coating solution generally ranges from 0.01 to 10% by mass, and preferably from 0.1 to 5% by mass.

As a coating method, spin coating is applied as described above. For coating, a conventionally known coating apparatus can be used.

The recording layer may have a single layer structure or a multiple layer structure. A thickness of the recording layer generally ranges from 20 to 500 nm, preferably from 30 to 300 nm, and more preferably from 50 to 100 nm.

The recording layer may contain various anti-fading agents in order to improve light fastness of the recording layer.

As the anti-fading agent, a singlet oxygen quencher is generally employed, and those described in known patent specifications and other publications can be used. Specific examples thereof include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492; Japanese Patent Application Publication (JP-B) Nos. 1-38680 and 6-26028; German Patent No. 350,399; and the *Journal of the Chemical Society of Japan,* Oct. 1992, page 1141.

The amount of the anti-fading agent such as a singlet oxygen quencher to be used generally ranges from 0.1 to 50% by mass, preferably from 0.5 to 45% by mass, more preferably from 3 to 40% by mass, and particularly preferably from 5 to 25% by mass of the dye.

In a case of a CD-RW or a DVD-RW, the recording layer is preferably formed of a phase change recording material comprising at least Ag, Al, Te, Sb, which can assume at least two states: crystalline state and amorphous state. Such a recording layer can be formed by a known method.

It should be noted that a known dielectric layer is formed on the recording layer, as necessary.

### Light Reflecting Layer

After the recording layer is formed, a light reflecting material is deposited on the recording layer by vapor deposition, spattering or ion plating to form the light reflecting layer. In forming the light reflecting layer, usually a mask is used to control an area in which the light reflecting layer is formed.

For the light reflecting layer, a light reflecting material having high reflectivity to laser light is used. The reflectivity is preferably 70% or more.

Examples of the light reflecting material with high reflectivity include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, as well as stainless steel. These light reflecting materials may be used alone or in combination of two or more, or in a form of alloy. Among them, Cr, Ni, Pt, Cu, Ag, Au, Al and stainless steel are preferable, Au, Ag, Al and their alloys are particularly preferable, and Au, Ag and their alloys are most preferable.

A thickness of the light reflecting layer generally ranges from 10 to 300 nm, and preferably from 50 to 200 nm.

### Protective Layer, Protective Substrate

After the light reflecting layer is formed, the protective layer is formed on the light reflecting layer.

The protective layer is formed by spin coating. By applying spin coating, the protective layer can be formed without damaging the recording layer (such as dissolution of the dye, or chemical reaction between the dye and the protective layer). A rotation speed for spin coating is preferably from 50 to 8000 rpm, and more preferably from 100 to 5000 rpm from the viewpoint of forming a uniform layer and preventing damage to the recording layer.

It should be noted that, where a ultraviolet curing resin is used in the protective layer, after the protective layer is formed by spin coating, ultraviolet light from a ultraviolet irradiation lamp (a metal halide lamp) is irradiated over the protective layer to cure the ultraviolet curing resin.

Further, in order to eliminate unevenness in a thickness of the protective layer to be formed, the coated ultraviolet curing resin may be left for a certain time before it is cured, as necessary.

The protective layer prevents penetration of moisture and formation of scratch. Preferable materials for forming the protective layer include ultraviolet curing resins, visible light curing resins, thermosetting resins, silicon dioxide, and the like. Among them, ultraviolet curing resins are particularly preferable. An example of the ultraviolet curing resin is SD-640 manufactured by Dai-Nippon Ink and Chemical Co., Ltd. Further, SD-347 (trade name, manufactured by Dai-Nippon Ink and Chemical Co., Ltd.), SD-694 (trade name, manufactured by Dai-Nippon Ink and Chemical Co., Ltd.), SKCD 1051 (trade name, manufactured by SKC), and the like, can also be used. A thickness of the protective layer preferably ranges from 1 to 200 µ m, and more preferably from 50 to 150 *µ*m.

In a layer structure where the protective layer is used as an optical path for laser, the protective layer is required to have transparency. The term "transparency" used herein means being transparent enough to transmit writing and reading light beams (transmittance of 90 or more).

In the case of a DVD-R or a DVD-RW, in stead of the protective layer, an adhesive layer comprising a ultraviolet curing resin, or the like, and a substrate (having a thickness of about 0.6 mm, made of a material similar to that of the above-described substrate), which serves as the protective substrate, are laminated.

Namely, after the light reflecting layer is formed, the ultraviolet curing resin (e.g., trade name: SD-640, manufactured by Dai-Nippon Ink and Chemical Co., Ltd.) is coated by spin coating to a thickness of 20 to 60 *µ*m to form the adhesive layer. On the thus formed adhesive layer, for example, a polycarbonate substrate (having a thickness of 0.6 mm), which serves as the protective substrate, is placed, and ultraviolet light is irradiated from above the substrate to cure the ultraviolet curing resin, thereby effecting adhesion.

In this manner, the optical recording medium, which comprises a laminated body including the substrate, the recording layer, the light reflective layer, the protective layer or the protective substrate (dummy substrate) provided via the adhesive layer, and the like, is produced.

It should be noted that, by suitably selecting a track pitch of the pre-groove formed on the substrate, a material forming the recording layer, and the like, the optical recording medium of the invention can also be applied to an optical recording medium which has a narrower track pitch than that of a conventional DVD, or the like, and on/from which information can be written/read with laser light having a smaller wavelength than that of conventionally used laser light.

### EXAMPLES

The present invention will now be described in further detail with reference to the example below, however, the example is not intended to limit the invention.

### Example 1

In 100 ml of 2,2,3,3-tetrafluoro-1-propanol, 2 g of cyanine dye represented by Chemical Formula (1) below was added, and was dissolved by being exposed to ultrasonic wave for 90 minutes, to prepare a recording layer forming coating solution. The recording layer forming coating solution was coated by spin coating on an injection-molded polycarbonate-resin substrate (polycarbonate: manufactured by Teijin, trade name: PANLITE AD5503), which has a thickness of 1.2 mm, an inner diameter of 15 mm and an outer diameter of 120 mm and is provided with a spiral groove, at a side thereof with the groove, to form a recording layer (thickness: 80 nm).

Conditions for spin coating were: coating rotation speed of 500 rpm was kept for 25 seconds, drying rotation speed of 1500 rpm was kept for 30 seconds, and spreading-off rotation speed of 3000 rpm was kept for 10 seconds.

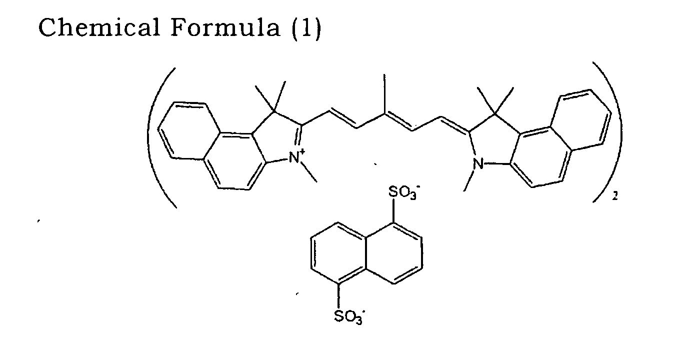

Subsequently, a light reflecting layer (thickness: 80 nm) made of Ag was formed by DC magnetron sputtering.

On the formed light reflecting layer, a ultraviolet curing resin (trade name: SD-318, manufactured by Dai-Nippon Ink and Chemical Co., Ltd.) was coated by spin coating, and the coated surface was exposed to ultraviolet light to cure the ultraviolet curing resin, to form a protective layer (thickness: 9 *µ*m).

On the formed protective layer, the water-based ink receiving area 11 and the water-insoluble ink receiving areas 10a and 10b were provided as shown in Fig. 1, to produce an optical recording medium.

The water-insoluble ink receiving areas 10 and 10b were formed by screen printing ultraviolet curing screen ink for receiving (ink from) a thermal transfer ink ribbon (trade name: UVSP THERMAL INK, manufactured by Teikoku Printing Inks Mfg. Co., Ltd.), and exposing the ink surface to ultraviolet light to cure the ink.

The water-based ink receiving area 11 was formed by screen printing ultraviolet curing screen ink for receiving (ink from) an inkjet (trade name: UVSPJR INK, manufactured by Teikoku Printing Inks Mfg. Co., Ltd.), and exposing the ink surface to ultraviolet light.

On five areas on a label surface of the produced optical recording medium, the same image was respectively printed using a printer (trade name: CD-R TITLE PRINTER CW-50, manufactured by Casio Computer Co., Ltd.). The five areas were as follows: an area (area X in Fig. 1) in which a printing area partially covers a text portion (characters "ABC" in Fig. 1), areas (areas Y and Z in Fig. 1) in which a printing area partially covers the water-based ink receiving area 11, and the substantially rectangular areas 10a' and 10b'. For printing, an ink ribbon having a width of 1.8 cm was used.

Surface condition was observed for each of the substantially rectangular areas 10a' and 10b' before printing, and both were found to have a smooth surface with no protrusion exceeding 3 *µ*m. Areas thereof were respectively 5 cm² and 15 cm².

Since the area X (5 cm²) included the formed text portion, the text portion created a difference in level, and therefore protrusions of 20 *µ*m high were formed. The water-based ink receiving area 11 present in the area Y (10 cm²) created a protrusion of 10 *µ*m high. The water-based ink receiving area 11 present in the area Z (5 cm²) also created a protrusion, however, a height thereof was 5 *µ*m.

After printing, condition of print was evaluated for each of these areas by observation with human eye. The images printed on the substantially rectangular areas 10a' and 10b' were free of print defects such as stain or blur, and therefore good images were obtained. The area Z included a protrusion of 5 *µ*m high and slight stain was observed around the protrusion, however, the condition was within an acceptable range for practical use. Therefore, the area Z can also be used as a substantially rectangular area. On the other hand, the areas X and Y included protrusions exceeding 10 *µ*m, and they could not generally be considered as being smooth. Therefore, print defects such as stain or blur were generated at and around the protrusions, and the condition was out of an acceptable range for practical use.

As described above, the optical recording medium of the invention is provided with the substantially rectangular smooth areas serving as printing areas (thermal transfer recording areas). Therefore, when images are printed on such areas, no stain or blur is produced at printed portions and areas surrounding the printing areas, and print defects can be reduced.

## Claims

1. An optical recording medium comprising:
a substrate;
a recording layer formed on the substrate, on which information can be recorded using laser light;
one of a protective layer and a protective substrate provided on the recording layer; and
a water-based ink receiving area and a water-insoluble ink receiving area formed on said one of the protective layer and the protective substrate,
wherein at least one of the water-insoluble ink receiving area comprises a substantially rectangular smooth area.

2. The optical recording medium according to claim 1, wherein the substantially rectangular smooth area has an area of at least 5 cm².

3. The optical recording medium according to claim 1, wherein the substantially rectangular smooth area includes no protrusion having a height exceeding 5 *µ*m.

4. The optical recording medium according to claim 1, wherein the substantially rectangular smooth area comprises at least one of a water-insoluble ink and a water-insoluble material.

5. An optical recording medium comprising:
a substrate;
a recording layer formed on the substrate, on which information can be recorded using laser light;
one of a protective layer and a protective substrate provided on the recording layer; and
a water-based ink receiving area and a water-insoluble ink receiving area formed on said one of the protective layer and the protective substrate,
wherein at least a portion of the water-insoluble ink receiving area, at which a thermal head of a printer overlaps, comprises a substantially rectangular smooth area.

6. The optical recording medium according to claim 5, wherein the substantially rectangular smooth area has an area of at least 5 cm².

7. The optical recording medium according to claim 5, wherein the substantially rectangular smooth area includes no protrusion having a height exceeding 5 *µ*m.

8. The optical recording medium according to claim 5, wherein the substantially rectangular smooth area comprises at least one of a water-insoluble ink and a water-insoluble material.
